# EUROPEAN PATENT APPLICATION

(11) **EP 4 343 594 A1**
(43) Date of publication of application: **27.03.2024**
(21) Application number: 23198752.0
(22) Date of filing: 21.09.2023
(51) Int. Cl.: G06F 21/55, G06F 21/56, H04L 9/40

(54) **SYSTEMS AND METHODS FOR AUTONOMOUS PROGRAM CLASSIFICATION GENERATION**

(30) Priority: 22.09.2022 WO PCT/GR2022/000049; 18.10.2022 US 202217968207
(71) Applicant: Citrix Systems Inc., Fort Lauderdale, FL 33309 (US)
(72) Inventor: PAPANIKITAS, Konstantinos, Fort Lauderdale, 33309 (US); PISPIRIGKOS, Georgios, Fort Lauderdale, 33309 (US); TRIANTIS, Panagiotis, Fort Lauderdale, 33309 (US); AIVALIOTIS, Panteleimon Evangelos, Fort Lauderdale, 33309 (US)
(74) Representative: Müller-Boré & Partner Patentanwälte PartG mbB

(57) **Abstract**

Systems and methods for autonomous program signature generation may include one or more processor(s) that identify a client device executing an autonomous program based at least on traffic from a plurality of client devices. The processor(s) may classify the autonomous program into one or more classifications based on an attribute of the autonomous program. The processor(s) may store an association between the autonomous program and the one or more classifications. In some implementations, the processor(s) may receive a plurality of entries over a time window, corresponding to associations between respective autonomous programs executing on client devices and classification(s) of the autonomous program. The processor(s) may identify one or more features for a respective user agent corresponding to the autonomous program and a corresponding classification of the autonomous program. The processor(s) may train a machine learning model using the one or more features for each entry and the corresponding classification.

## Description

### FIELD OF THE DISCLOSURE

The present application generally relates to computers and networking systems. In particular, the present application relates to systems and methods for improved identification and classification of autonomous programs.

### BACKGROUND

Software applications (e.g., autonomous programs, bots, intelligent agents, etc.) may be capable of traversing the Internet and executing various advanced tasks autonomously without direct human direction or input.

### BRIEF SUMMARY

Autonomous programs may be capable of traversing the Internet and executing various advanced tasks autonomously without direct human direction or input. Some autonomous programs can be categorized as favorable autonomous programs based on the autonomous program accomplishing or performing useful and constructive tasks for web applications (e.g., site monitoring bots, ping-back bots, copyright bots, search engine bots, commercial bots, etc.) without negatively impacting a user's web browsing experience. Other autonomous programs can be categorized as unfavorable autonomous programs based on the autonomous program. One primary concern for networks and website administrators is identifying autonomous programs and classifying them based on their identifying characteristics. For example, administrators may seek to classify the autonomous program as either good or malicious based on the identifiers of the autonomous program. Therefore, systems and methods for identifying and classifying autonomous programs may be used to identify and address malicious autonomous programs.

Specifically, businesses or entities with an online presence may prevent automated attacks by autonomous programs on their websites, mobile apps, and application programming interfaces by monitoring network traffic to identify autonomous programs. Properly identifying and classifying autonomous programs may lead to many benefits including reduction in information technology costs, user experience protection, increased data security, and data frameworks compliance (e.g., general data protection regulation (GDPR), California Consumer Privacy Act (CCPA)). In some implementations, autonomous program identification and mitigation services may identify autonomous programs by referencing to a pre-populated database of bot signatures, which may overlook the rapidly changing and multi-variate behavior of contemporary autonomous programs.

The systems and methods described herein provide a solution to this problem of real-time autonomous program identification and categorization by leveraging real user measurements (RUMs) to analyze user-behavior and network fingerprints in real-time (or near real-time) to identify autonomous programs and update a database or data structure which may be available / accessible through HTTP requests. RUMs may be or include real-time metrics collected from user browsers or native apps towards a list of endpoints including various different cloud platforms and content delivery networks (CDNs).

At least one aspect of this disclosure is directed to a method. The method includes identifying, by one or more processors based at least on traffic from a plurality of client devices, at least one client device of the plurality of client devices executing an autonomous program. The method includes classifying, by the one or more processors, the autonomous program into one or more classifications based on at least one attribute of the autonomous program. The method includes storing, by the one or more processors, an association between the autonomous program and the one or more classifications.

In some embodiments, identifying the at least one client device executing the autonomous program comprises identifying, by the one or more processors, the at least one client device based on at least one of: a number of sessions established by the at least one client device within a time window, or user-session data associated with execution of the autonomous program. In some embodiments, the at least one client device is identified as executing the autonomous program responsive to the number of sessions established by the at least one client device within the time window satisfies a threshold criteria. In some embodiments, the user session data comprises user agent data, and wherein the at least one client device is identified as executing the autonomous program based on the user agent data. In some embodiments, identifying the at least one client device executing the autonomous program comprises identifying, by the one or more processors, the at least one client device based on at least one of a total round trip time (RTT), a total page load time, a start rendering time, or a total document object model (DOM) time satisfying a threshold criteria.

In some embodiments, classifying the autonomous program into the one or more classifications further comprises: identifying, by the one or more processors, in one or more databases maintaining data corresponding to user agents for respective autonomous programs, an entry of a user agent associated with the autonomous program and determining, by the one or more processors, the at least one of the autonomous program type, the software category, the autonomous program name, or the developer of the autonomous program based on the entry for the user agent in the one or more databases. In some embodiments, the software category is at least one of an application software category, a browser software category, a browser application engine software category, a site monitor software category, an analyzer software category, a feed software category, a speed test software category, a media player software category, a link checker software category, a tool software category, a screenshot software category, an advertising software category, a crawler software category, or a scraper software category.

In some embodiments, the association is stored in one or more data structures, the method further comprises: retrieving, by the one or more processors, from the one or more data structures, a plurality of entries corresponding to autonomous programs, extracting, by the one or more processors, for each entry of the plurality of entries, one or more features for a respective user agent corresponding to the autonomous program, and training, by the one or more processors, a machine learning model using the one or more features for each entry and the corresponding classification.

In some embodiments, the traffic comprises first traffic, the method further comprises: receiving, by the one or more processors, second traffic from a second client device of the plurality of client devices, identifying, by the one or more processors, based on the second traffic, that the second client device is executing a second autonomous program, identifying, by the one or more processors, a user agent field corresponding to the second traffic, and classifying, by the one or more processors, the second autonomous program by applying data corresponding to the user agent field to the machine learning model. In some embodiments, the at least one attribute comprises a type of the autonomous program, a category of software of the autonomous program, a name of the autonomous program, or a developer of the autonomous program.

Another aspect of this disclosure is directed to a method. The method includes receiving, by one or more processors, storing, a plurality of entries over a time window, the plurality of entries corresponding to associations between respective autonomous programs executing on client devices and one or more classifications of the autonomous program. The method includes identifying, by the one or more processors, for each entry of the plurality of entries, one or more features for a respective user agent corresponding to the autonomous program and a corresponding classification of the autonomous program. The method includes training, by the one or more processors, a machine learning model using the one or more features for each entry and the corresponding classification.

In some embodiments, the method further includes receiving, by the one or more processors, traffic from a client device. In some embodiments, the method further includes identifying, by the one or more processors, based on the traffic, that the client device is executing an autonomous program. In some embodiments, the method further includes identifying, by the one or more processors, a user agent field corresponding to the traffic. In some embodiments, the method further includes classifying, by the one or more processors, the autonomous program executing on the client device by applying data corresponding to the user agent field to the machine learning model. In some embodiments, when the time window is a first time window, the method further includes retrieving, by the one or more processors, from one or more data structures, a plurality of second entries over a second time window. In some embodiments, when the time window is a first time window, the method further includes re-training, by the one or more processors, the machine learning model using one or more second features and corresponding classifications for each of the plurality of second entries.

In some embodiments, the method further includes identifying, by one or more processors, based on traffic from a plurality of client devices, at least one client device executing an autonomous program. In some embodiments, the method further includes classifying, by the one or more processors, the autonomous program into one or more classifications based on at least one of an autonomous program type, a software category, an autonomous program name, or a developer of the autonomous program. In some embodiments, the method further includes storing, by the one or more processors in the one or more data structures, an association between the autonomous program and the one or more classifications.

In some embodiments, when identifying the at least one client device executing the autonomous program, the method further comprises identifying, by the one or more processors, the at least one client device based on at least one of: a number of sessions established by the at least one client device within a time window or user-session data associated with execution of the autonomous program. In some embodiments, the at least one client device is identified as executing the autonomous program responsive to the number of sessions established by the at least one client device within the time window satisfies a threshold criteria. In some embodiments, the user session data comprises user agent data, and wherein the at least one client device is identified as executing the autonomous program based on the user agent data.

In some embodiments, when identifying the at least one client device executing the autonomous program, the method further includes identifying, by the one or more processors, the at least one client device based on at least one of a total round trip time (RTT), a total page load time, a start rendering time, or a total document object model (DOM) time satisfying a threshold criteria. In some embodiments, when classifying the autonomous program into the one or more classifications, the method further includes identifying, by the one or more processors, in one or more databases maintaining data corresponding to user agents for respective autonomous programs, an entry of a user agent associated with the autonomous program. In some embodiments, when classifying the autonomous program into the one or more classifications, the method further includes determining, by the one or more processors, the at least one of the autonomous program type, the software category, the autonomous program name, or the developer of the autonomous program based on the entry for the user agent in the one or more databases.

Another aspect of this disclosure is directed to a system. The system includes one or more processors. The one or more processors are configured to receive a plurality of entries over a time window, the plurality of entries corresponding to associations between respective autonomous programs executing on client devices and one or more classifications of the autonomous program. The one or more processors are configured to identify, for each entry of the plurality of entries, one or more features for a respective user agent corresponding to the autonomous program and a corresponding classification of the autonomous program. The one or more processors are configured to train a machine learning model using the one or more features for each entry and the corresponding classification.

### BRIEF DESCRIPTION OF THE FIGURES

The foregoing and other objects, aspects, features, and advantages of the present solution will become more apparent and better understood by referring to the following description taken in conjunction with the accompanying drawings, in which:
FIG. 1A is a block diagram of embodiments of a computing device;
FIG. 1B is a block diagram depicting a computing environment comprising a client device in communication with cloud service providers;
FIG. 2A is a block diagram of an example system in which resource management services may manage and streamline access by clients to resource feeds (via one or more gateway services) and/or software-as-a-service (SaaS) applications;
FIG. 2B is a block diagram showing an example implementation of the system shown in FIG. 2A in which various resource management services as well as a gateway service are located within a cloud computing environment;
FIG. 2C is a block diagram similar to that shown in FIG. 2B but in which the available resources are represented by a single box labeled "systems of record," and further in which several different services are included among the resource management services;
FIG. 3 is a diagram of a system for detecting and classifying online autonomous programs in accordance with an illustrative embodiment;
FIG. 4 is a flow diagram describing the a method for detecting an autonomous program in accordance with an illustrative embodiment;
FIG. 5 is a diagram of a system for training an autonomous program detection model in accordance with an illustrative embodiment;
FIG. 6 is a flow diagram describing the a method for training an autonomous program detection model in accordance with an illustrative embodiment;

The features and advantages of the present solution will become more apparent from the detailed description set forth below when taken in conjunction with the drawings, in which like reference characters identify corresponding elements throughout. In the drawings, like reference numbers generally indicate identical, functionally similar, and/or structurally similar elements.

### DETAILED DESCRIPTION

Autonomous programs may be capable of traversing the Internet and executing various advanced tasks autonomously without direct human direction or input. Some autonomous programs can be categorized as either favorable autonomous programs based on the autonomous program accomplishing or performing useful and constructive tasks for web applications (e.g., site monitoring bots, ping-back bots, copyright bots, search engine bots, commercial bots, etc.) without negatively impacting a user's web browsing experience. Other autonomous programs can be categorized as unfavorable autonomous programs based on the autonomous program performing tasks which are not useful or constructive (such as bots which attempt to gain access to password protected resources, such as password spraying bots, brute force bots, etc.). One primary concern for networks and website administrators is identifying autonomous programs and classifying them based on their identifying characteristics. For example, administrators may seek to classify the autonomous program as either good or malicious based on the identifiers of the autonomous program. Therefore, systems and methods for identifying and classifying autonomous programs may be used to identify and address malicious autonomous programs. Autonomous program detection is the first step in preventing the security threats online. Specifically, by detecting the incoming autonomous program traffic in real-time, the malicious actors' identification and prevention from further engagement with websites, applications, or networks, is made feasible.

Specifically, businesses or entities with an online presence may aim to prevent automated attacks by autonomous programs on their websites, mobile apps, and application programming interfaces by monitoring network traffic to identify autonomous programs. Properly identifying and classifying autonomous programs leads to many benefits including reduction in information technology costs, user experience protection, increased data security, and data frameworks compliance (e.g., general data protection regulation (GDPR), California Consumer Privacy Act (CCPA)). Typically, autonomous program identification and mitigation services usually identifies autonomous programs by referencing to a pre-populated database of autonomous program signatures, which tend to overlook the rapidly changing and multi-variate behavior of contemporary autonomous programs.

The systems and methods described herein provide a solution to this problem of real-time autonomous program identification and categorization by leveraging real user measurements (RUMs) to analyze of user-behavior and network fingerprints in real time to identify autonomous programs and update an internal autonomous program signature database that is readily available through plain HTTP requests. RUMs refer to real time metrics collected from user browsers or native apps towards a huge list of endpoints including various different cloud platforms and content delivery networks (CDNs).

More specifically, the system and methods described herein may leverage a large number (e.g., millions, billions, etc.) of real transactions performed by the traffic management radar telemetry sessions to identify autonomous programs. Autonomous program related traffic can be efficiently identified and classified in actual time using natural language processing (NLP) methods and artificial intelligence and machine learning techniques through the on-the-fly user-behavior analysis and network fingerprints' evaluation. The systems and methods may be readily extended to support any input data stream including similar client-side information, even if the current implementation specializes in the real-time analysis of the RUM traffic. For example, the systems and methods can be extended to generate IP-address, autonomous system number (ASN), region, etc., oriented reports. In this fashion, the presented mechanism could also be considered as a real-time IP address reputation engine capable of IP spoofing and catching non-HTTP malware.

For purposes of reading the description of the various embodiments below, the following descriptions of the sections of the specification and their respective contents may be helpful:
Section A describes a computing environment which may be useful for practicing embodiments described herein;
Section B describes resource management services for managing and streamlining access by clients to resource feeds;
Section C describes systems and methods for autonomous program detection;
Section D describes systems and methods for training an autonomous program detection model; and
Section E describes various example embodiments of the systems and methods described herein.

### A. Computing Environment

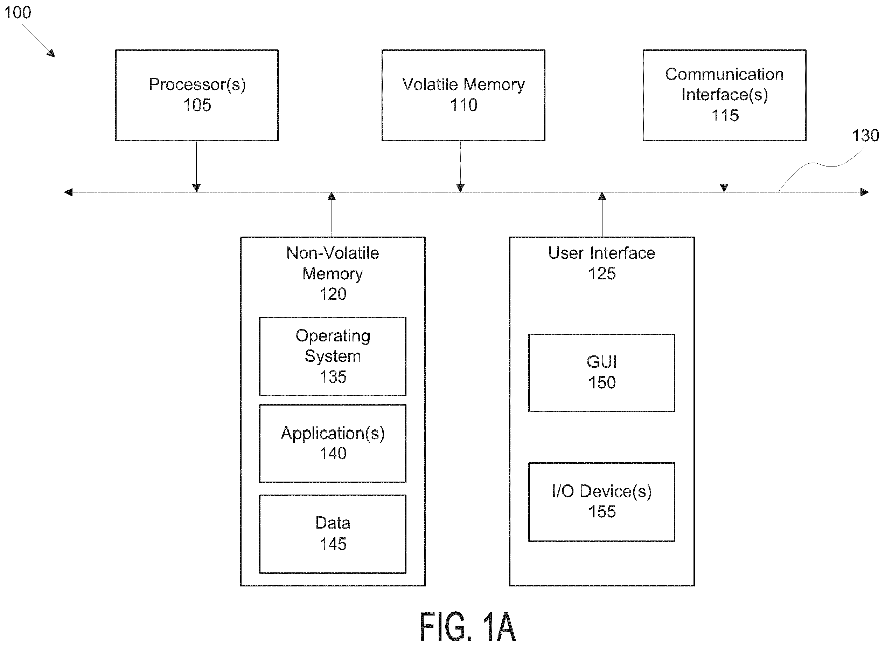

As shown in FIG. 1A, computer 100 may include one or more processors 105, volatile memory 110 (e.g., random access memory (RAM)), non-volatile memory 120 (e.g., one or more hard disk drives (HDDs) or other magnetic or optical storage media, one or more solid state drives (SSDs) such as a flash drive or other solid state storage media, one or more hybrid magnetic and solid state drives, and/or one or more virtual storage volumes, such as a cloud storage, or a combination of such physical storage volumes and virtual storage volumes or arrays thereof), user interface (UI) 125, one or more communications interfaces 115, and communication bus 130. User interface 125 may include graphical user interface (GUI) 150 (e.g., a touchscreen, a display, etc.) and one or more input/output (I/O) devices 155 (e.g., a mouse, a keyboard, a microphone, one or more speakers, one or more cameras, one or more biometric scanners, one or more environmental sensors, one or more accelerometers, etc.). Non-volatile memory 120 stores operating system 135, one or more applications 140, and data 145 such that, for example, computer instructions of operating system 135 and/or applications 140 are executed by processor(s) 105 out of volatile memory 110. In some embodiments, volatile memory 110 may include one or more types of RAM and/or a cache memory that may offer a faster response time than a main memory. Data may be entered using an input device of GUI 150 or received from I/O device(s) 155. Various elements of computer 100 may communicate via one or more communication buses, shown as communication bus 130.

Computer 100 as shown in FIG. 1A is shown merely as an example, as clients, servers, intermediary and other networking devices and may be implemented by any computing or processing environment and with any type of machine or set of machines that may have suitable hardware and/or software capable of operating as described herein. Processor(s) 105 may be implemented by one or more programmable processors to execute one or more executable instructions, such as a computer program, to perform the functions of the system. As used herein, the term "processor" describes circuitry that performs a function, an operation, or a sequence of operations. The function, operation, or sequence of operations may be hard coded into the circuitry or soft coded by way of instructions held in a memory device and executed by the circuitry. A "processor" may perform the function, operation, or sequence of operations using digital values and/or using analog signals. In some embodiments, the "processor" can be embodied in one or more application specific integrated circuits (ASICs), microprocessors, digital signal processors (DSPs), graphics processing units (GPUs), microcontrollers, field programmable gate arrays (FPGAs), programmable logic arrays (PLAs), multi-core processors, or general-purpose computers with associated memory. The "processor" may be analog, digital or mixed-signal. In some embodiments, the "processor" may be one or more physical processors or one or more "virtual" (e.g., remotely located or "cloud") processors. A processor including multiple processor cores and/or multiple processors multiple processors may provide functionality for parallel, simultaneous execution of instructions or for parallel, simultaneous execution of one instruction on more than one piece of data.

Communications interfaces 115 may include one or more interfaces to enable computer 100 to access a computer network such as a Local Area Network (LAN), a Wide Area Network (WAN), a Personal Area Network (PAN), or the Internet through a variety of wired and/or wireless or cellular connections.

In described embodiments, the computer 100 may execute an application on behalf of a user of a client computing device. For example, the computer 100 may execute a virtual machine, which provides an execution session within which applications execute on behalf of a user or a client computing device, such as a hosted desktop session. The computer 100 may also execute a terminal services session to provide a hosted desktop environment. The computer 100 may provide access to a computing environment including one or more of: one or more applications, one or more desktop applications, and one or more desktop sessions in which one or more applications may execute.

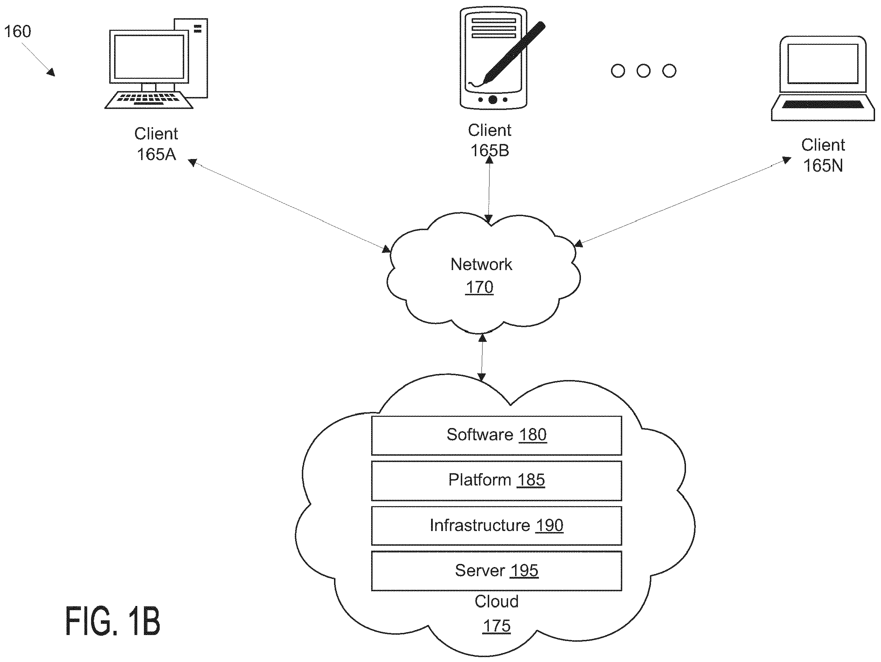

Referring to FIG. 1B, a computing environment 160 is depicted. Computing environment 160 may generally be considered implemented as a cloud computing environment, an on-premises ("on-prem") computing environment, or a hybrid computing environment including one or more on-prem computing environments and one or more cloud computing environments. When implemented as a cloud computing environment, also referred as a cloud environment, cloud computing or cloud network, computing environment 160 can provide the delivery of shared services (e.g., computer services) and shared resources (e.g., computer resources) to multiple users. For example, the computing environment 160 can include an environment or system for providing or delivering access to a plurality of shared services and resources to a plurality of users through the internet. The shared resources and services can include, but not limited to, networks, network bandwidth, servers 195, processing, memory, storage, applications, virtual machines, databases, software, hardware, analytics, and intelligence.

In embodiments, the computing environment 160 may provide client 165 with one or more resources provided by a network environment. The computing environment 160 may include one or more clients 165a-165n, in communication with a cloud 175 over one or more networks 170A, 170B. Clients 165 may include, e.g., thick clients, thin clients, and zero clients. The cloud 175 may include back end platforms, e.g., servers 195, storage, server farms, or data centers. The clients 165 can be the same as or substantially similar to computer 100 of FIG. 1A.

The users or clients 165 can correspond to a single organization or multiple organizations. For example, the computing environment 160 can include a private cloud serving a single organization (e.g., enterprise cloud). The computing environment 160 can include a community cloud or public cloud serving multiple organizations. In embodiments, the computing environment 160 can include a hybrid cloud that is a combination of a public cloud and a private cloud. For example, the cloud 175 may be public, private, or hybrid. Public clouds 175 may include public servers 195 that are maintained by third parties to the clients 165 or the owners of the clients 165. The servers 195 may be located off-site in remote geographical locations as disclosed above or otherwise. Public clouds 175 may be connected to the servers 195 over a public network 170. Private clouds 175 may include private servers 195 that are physically maintained by clients 165 or owners of clients 165. Private clouds 175 may be connected to the servers 195 over a private network 170. Hybrid clouds 175 may include both the private and public networks 170A, 170B and servers 195.

The cloud 175 may include back end platforms, e.g., servers 195, storage, server farms or data centers. For example, the cloud 175 can include or correspond to a server 195 or system remote from one or more clients 165 to provide third party control over a pool of shared services and resources. The computing environment 160 can provide resource pooling to serve multiple users via clients 165 through a multi-tenant environment or multi-tenant model with different physical and virtual resources dynamically assigned and reassigned responsive to different demands within the respective environment. The multi-tenant environment can include a system or architecture that can provide a single instance of software, an application or a software application to serve multiple users. In embodiments, the computing environment 160 can provide on-demand self-service to unilaterally provision computing capabilities (e.g., server time, network storage) across a network for multiple clients 165. The computing environment 160 can provide an elasticity to dynamically scale out or scale in responsive to different demands from one or more clients 165. In some embodiments, the computing environment 160 can include or provide monitoring services to monitor, control and/or generate reports corresponding to the provided shared services and resources.

In some embodiments, the computing environment 160 can include and provide different types of cloud computing services. For example, the computing environment 160 can include Infrastructure as a service (IaaS). The computing environment 160 can include Platform as a service (PaaS). The computing environment 160 can include server-less computing. The computing environment 160 can include Software as a service (SaaS). For example, the cloud 175 may also include a cloud based delivery, e.g. Software as a Service (SaaS) 180, Platform as a Service (PaaS) 185, and Infrastructure as a Service (IaaS) 190. IaaS may refer to a user renting the use of infrastructure resources that are needed during a specified time period. IaaS providers may offer storage, networking, servers or virtualization resources from large pools, allowing the users to quickly scale up by accessing more resources as needed. Examples of IaaS include AMAZON WEB SERVICES provided by Amazon.com, Inc., of Seattle, Washington, RACKSPACE CLOUD provided by Rackspace US, Inc., of San Antonio, Texas, Google Compute Engine provided by Google Inc. of Mountain View, California, or RIGHTSCALE provided by RightScale, Inc., of Santa Barbara, California. PaaS providers may offer functionality provided by IaaS, including, e.g., storage, networking, servers or virtualization, as well as additional resources such as, e.g., the operating system, middleware, or runtime resources. Examples of PaaS include WINDOWS AZURE provided by Microsoft Corporation of Redmond, Washington, Google App Engine provided by Google Inc., and HEROKU provided by Heroku, Inc. of San Francisco, California. SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include GOOGLE APPS provided by Google Inc., SALESFORCE provided by Salesforce.com Inc. of San Francisco, California, or OFFICE 365 provided by Microsoft Corporation. Examples of SaaS may also include data storage providers, e.g. DROPBOX provided by Dropbox, Inc. of San Francisco, California, Microsoft SKYDRIVE provided by Microsoft Corporation, Google Drive provided by Google Inc., or Apple ICLOUD provided by Apple Inc. of Cupertino, California.

Clients 165 may access IaaS resources with one or more IaaS standards, including, e.g., Amazon Elastic Compute Cloud (EC2), Open Cloud Computing Interface (OCCI), Cloud Infrastructure Management Interface (CIMI), or OpenStack standards. Some IaaS standards may allow clients access to resources over HTTP, and may use Representational State Transfer (REST) protocol or Simple Object Access Protocol (SOAP). Clients 165 may access PaaS resources with different PaaS interfaces. Some PaaS interfaces use HTTP packages, standard Java APIs, JavaMail API, Java Data Objects (JDO), Java Persistence API (JPA), Python APIs, web integration APIs for different programming languages including, e.g., Rack for Ruby, WSGI for Python, or PSGI for Perl, or other APIs that may be built on REST, HTTP, XML, or other protocols. Clients 165 may access SaaS resources through the use of web-based user interfaces, provided by a web browser (e.g. GOOGLE CHROME, Microsoft INTERNET EXPLORER, or Mozilla Firefox provided by Mozilla Foundation of Mountain View, California). Clients 165 may also access SaaS resources through smartphone or tablet applications, including, e.g., Salesforce Sales Cloud, or Google Drive app. Clients 165 may also access SaaS resources through the client operating system, including, e.g., Windows file system for DROPBOX.

In some embodiments, access to IaaS, PaaS, or SaaS resources may be authenticated. For example, a server or authentication server may authenticate a user via security certificates, HTTPS, or API keys. API keys may include various encryption standards such as, e.g., Advanced Encryption Standard (AES). Data resources may be sent over Transport Layer Security (TLS) or Secure Sockets Layer (SSL).

### B. Resource Management Services for Managing and Streamlining Access by Clients to Resource Feeds

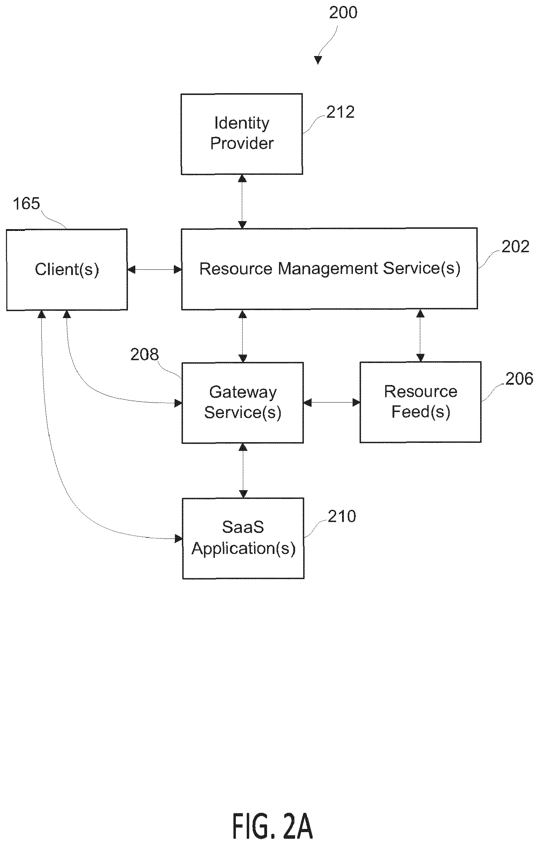

FIG. 2A is a block diagram of an example system 200 in which one or more resource management services 202 may manage and streamline access by one or more clients 165 to one or more resource feeds 206 (via one or more gateway services 208) and/or one or more SaaS applications 210. In particular, the resource management service(s) 202 may employ an identity provider 212 to authenticate the identity of either end-users, which use a client 165, or the appliances themselves. Following authentication, the resource management service(s) 202 can identify one of more resources for which the user has authorization to access. For example, the resource management service(s) can identify that client 165A has authorization to access the resource feed related to DNS multipath routing whereas client 165B is not (e.g., client 165B is not licensed for a feature; client 165B is not multipath capable, etc.). In response to the user selecting one of the identified resources, the resource management service(s) 202 may send appropriate access credentials to the requesting client 165, and the client 165 may then use those credentials to access the selected resource. For the resource feed(s) 206, the client 165 may use the supplied credentials to access the selected resource via a gateway service 208. For the SaaS application(s) 210, the client 165 may use the credentials to access the selected application directly.

The client(s) 165 may be any type of computing devices capable of accessing the resource feed(s) 206 and/or the SaaS application(s) 210, and may, for example, include a variety of desktop or laptop computers, smartphones, tablets, and network appliances such as routers and firewalls. The resource feed(s) 206 may include any of numerous resource types and may be provided from any of numerous locations. In some embodiments, for example, the resource feed(s) 206 may include one or more systems or services for providing virtual applications and/or desktops to the client(s) 165, one or more file repositories and/or file sharing systems, one or more secure browser services, one or more access control services for the SaaS applications 210, one or more management services for local applications on the client(s) 165, one or more internet enabled devices or sensors, etc. Each of the resource management service(s) 202, the resource feed(s) 206, the gateway service(s) 208, the SaaS application(s) 210, and the identity provider 212 may be located within an on-premises data center of an organization for which the system 200 is deployed, within one or more cloud computing environments, or elsewhere.

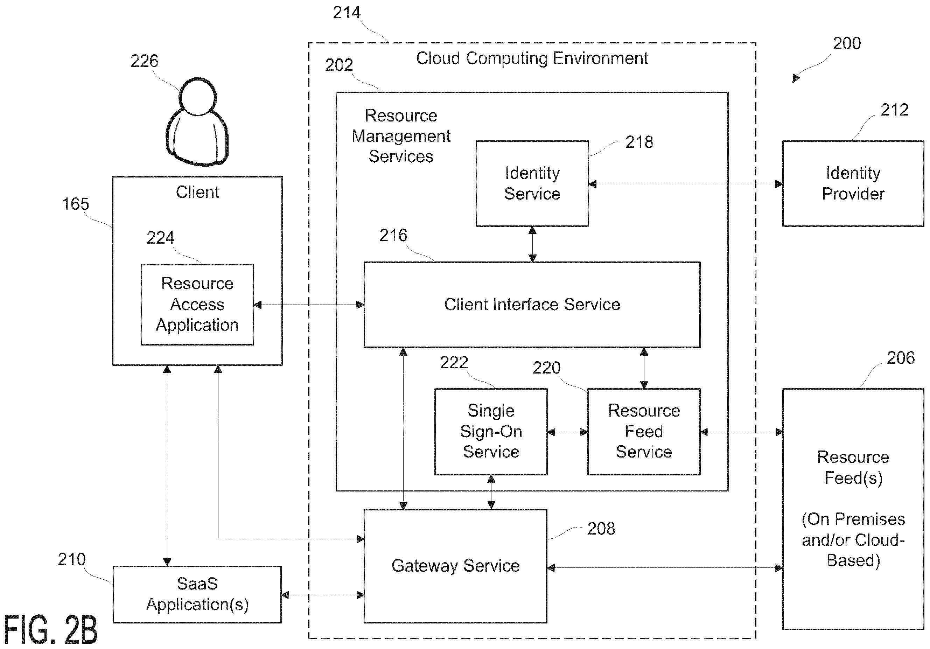

FIG. 2B is a block diagram showing an example implementation of the system 200 shown in FIG. 2A in which various resource management services 202 as well as a gateway service 208 are located within a cloud computing environment 214. The cloud-computing environment may, for example, include MICROSOFT AZURE Cloud, AMAZON Web Services, GOOGLE Cloud, or IBM Cloud.

For any of illustrated components (other than the client 165) that are not based within the cloud computing environment 214, cloud connectors (not shown in FIG. 2B) may be used to interface those components with the cloud computing environment 214. Such cloud connectors may, for example, execute on WINDOWS Server instances hosted in resource locations, and may create a reverse proxy to route traffic between the site(s) and the cloud-computing environment 214. In the illustrated example, the cloud-based resource management services 202 include a client interface service 216, an identity service 218, a resource feed service 220, and a single sign-on service 222. As shown, in some embodiments, the client 165 may use a resource access application 224 to communicate with the client interface service 216 as well as to present a user interface on the client 165 that a user 226 can operate to access the resource feed(s) 206 and/or the SaaS application(s) 210. The resource access application 224 may either be installed on the client 165, or may be executed by the client interface service 216 (or elsewhere in the system 200) and accessed using a web browser (not shown in FIG. 2B) on the client 165.

As explained in more detail below, in some embodiments, the resource access application 224 and associated components may provide the user 226 with a personalized, all-in-one interface enabling instant and seamless access to all the user's SaaS and web applications, files, virtual Windows applications, virtual Linux applications, desktops, mobile applications, Citrix DaaS^{™} (formerly known as Citrix Virtual Apps and Desktops^{™}, XenApp^{®}, or XenDesktop^{®}), local applications, and other data deployed across multiple locations for geo-redundancy.

When the resource access application 224 is launched or otherwise accessed by a respective client 165, the client interface service 216 may send a sign-on request to the identity service 218. In some embodiments, the identity provider 212 may be located on the premises of the organization for which the system 200 is deployed. The identity provider 212 may, for example, correspond to an on-premises WINDOWS Active Directory. In such embodiments, the identity provider 212 may be connected to the cloud-based identity service 218 using a cloud connector (not shown in FIG. 2B), as described above. Upon receiving a sign-on request, the identity service 218 may cause the resource access application 224 (via the client interface service 216) to prompt the user 226 for the user's authentication credentials (e.g., user-name and password). Upon receiving the user's authentication credentials, the client interface service 216 may pass the credentials along to the identity service 218, and the identity service 218 may, in turn, forward them to the identity provider 212 for authentication, for example, by comparing them against an Active Directory domain. Once the identity service 218 receives confirmation from the identity provider 212 that the user's identity has been properly authenticated, the client interface service 216 may send a request to the resource feed service 220 for a list of subscribed resources for the user 226.

In other embodiments (not illustrated in FIG. 2B), the identity provider 212 may be a cloud-based identity service, such as a MICROSOFT AZURE Active Directory. In such embodiments, upon receiving a sign-on request from the client interface service 216, the identity service 218 may, via the client interface service 216, cause the client 165 to be redirected to the cloud-based identity service to complete an authentication process. The cloud-based identity service may then cause the client 165 to prompt the user 226 to enter the user's authentication credentials. Upon determining the user's identity has been properly authenticated, the cloud-based identity service may send a message to the resource access application 224 indicating the authentication attempt was successful, and the resource access application 224 may then inform the client interface service 216 of the successfully authentication. Once the identity service 218 receives confirmation from the client interface service 216 that the user's identity has been properly authenticated, the client interface service 216 may send a request to the resource feed service 220 for a list of subscribed resources for the user 226.

For the configured resource feeds, the resource feed service 220 may request an identity token from the single sign-on service 222. The resource feed service 220 may then pass the feed-specific identity tokens it receives to the points of authentication for the respective resource feeds 206. The resource feed 206 may then respond with a list of resources configured for the respective identity. The resource feed service 220 may then aggregate all items from the different feeds and forward them to the client interface service 216, which may cause the resource access application 224 to present a list of available resources on a user interface of the client 165. The list of available resources may, for example, be presented on the user interface of the client 165 as a set of selectable icons or other elements corresponding to accessible resources. The resources so identified may, for example, include one or more virtual applications and/or desktops (e.g., Citrix Virtual Apps and Desktops^{™}, VMware Horizon, Microsoft RDS, etc.), one or more file repositories and/or file sharing systems (e.g., Sharefile^{®}, one or more secure browsers, one or more internet enabled devices or sensors, one or more local applications installed on the client 165, and/or one or more SaaS applications 210 to which the user 226 has subscribed. The lists of local applications and the SaaS applications 210 may, for example, be supplied by resource feeds 206 for respective services that manage which such applications are to be made available to the user 226 via the resource access application 224. Examples of SaaS applications 210 that may be managed and accessed as described herein include Microsoft Office 365 applications, SAP SaaS applications, Workday applications, etc.

For resources other than local applications and the SaaS application(s) 210, upon the user 226 selecting one of the listed available resources, the resource access application 224 may cause the client interface service 216 to forward a request for the specified resource to the resource feed service 220. In response to receiving such a request, the resource feed service 220 may request an identity token for the corresponding feed from the single sign-on service 222. The resource feed service 220 may then pass the identity token received from the single sign-on service 222 to the client interface service 216 where a launch ticket for the resource may be generated and sent to the resource access application 224. Upon receiving the launch ticket, the resource access application 224 may initiate a secure session to the gateway service 208 and present the launch ticket. When the gateway service 208 is presented with the launch ticket, it may initiate a secure session to the appropriate resource feed and present the identity token to that feed to seamlessly authenticate the user 226. Once the session initializes, the client 165 may proceed to access the selected resource.

When the user 226 selects a local application, the resource access application 224 may cause the selected local application to launch on the client 165. When the user 226 selects a SaaS application 210, the resource access application 224 may cause the client interface service 216 request a one-time uniform resource locator (URL) from the gateway service 208 as well a preferred browser for use in accessing the SaaS application 210. After the gateway service 208 returns the one-time URL and identifies the preferred browser, the client interface service 216 may pass that information along to the resource access application 224. The client 165 may then launch the identified browser and initiate a connection to the gateway service 208. The gateway service 208 may then request an assertion from the single sign-on service 222. Upon receiving the assertion, the gateway service 208 may cause the identified browser on the client 165 to be redirected to the logon page for identified SaaS application 210 and present the assertion. The SaaS may then contact the gateway service 208 to validate the assertion and authenticate the user 226. Once the user has been authenticated, communication may occur directly between the identified browser and the selected SaaS application 210, thus allowing the user 226 to use the client 165 to access the selected SaaS application 210.

In some embodiments, the preferred browser identified by the gateway service 208 may be a specialized browser embedded in the resource access application 224 (when the resource application is installed on the client 165) or provided by one of the resource feeds 206 (when the resource access application 224 is located remotely) (e.g., via a secure browser service). In such embodiments, the SaaS applications 210 may incorporate enhanced security policies to enforce one or more restrictions on the embedded browser. Examples of such policies include (1) requiring use of the specialized browser and disabling use of other local browsers, (2) restricting clipboard access (e.g., by disabling cut/copy/paste operations between the application and the clipboard), (3) restricting printing (e.g., by disabling the ability to print from within the browser), (3) restricting navigation (e.g., by disabling the next and/or back browser buttons), (4) restricting downloads (e.g., by disabling the ability to download from within the SaaS application), and (5) displaying watermarks (e.g., by overlaying a screen-based watermark showing the username and IP address associated with the client 165 such that the watermark will appear as displayed on the screen if the user tries to print or take a screenshot). Further, in some embodiments, when a user selects a hyperlink within a SaaS application, the specialized browser may send the URL for the link to an access control service (e.g., implemented as one of the resource feed(s) 206) for assessment of its security risk by a web filtering service. For approved URLs, the specialized browser may be permitted to access the link. For suspicious links, however, the web filtering service may have the client interface service 216 send the link to a secure browser service, which may start a new virtual browser session with the client 165, and thus allow the user to access the potentially harmful linked content in a safe environment.

In some embodiments, in addition to or in lieu of providing the user 226 with a list of resources that are available to be accessed individually, as described above, the user 226 may instead be permitted to choose to access a streamlined feed of event notifications and/or available actions that may be taken with respect to events that are automatically detected with respect to one or more of the resources. This streamlined resource activity feed, which may be customized for each user 226, may allow users to monitor important activity involving all of their resources-SaaS applications, web applications, Windows applications, Linux applications, desktops, file repositories and/or file sharing systems, and other data through a single interface, without needing to switch context from one resource to another. Further, event notifications in a resource activity feed may be accompanied by a discrete set of user-interface elements (e.g., "approve," "deny," and "see more detail" buttons), allowing a user to take one or more simple actions with respect to each event right within the user's feed. In some embodiments, such a streamlined, intelligent resource activity feed may be enabled by one or more micro-applications, or "microapps," that can interface with underlying associated resources using APIs or the like. The responsive actions may be user-initiated activities that are taken within the microapps and that provide inputs to the underlying applications through the API or other interface. The actions a user performs within the microapp may, for example, be designed to address specific common problems and use cases quickly and easily, adding to increased user productivity (e.g., request personal time off, submit a help desk ticket, etc.). In some embodiments, notifications from such event-driven microapps may additionally or alternatively be pushed to clients 165 to notify a user 226 of something that requires the user's attention (e.g., approval of an expense report, new course available for registration, etc.).

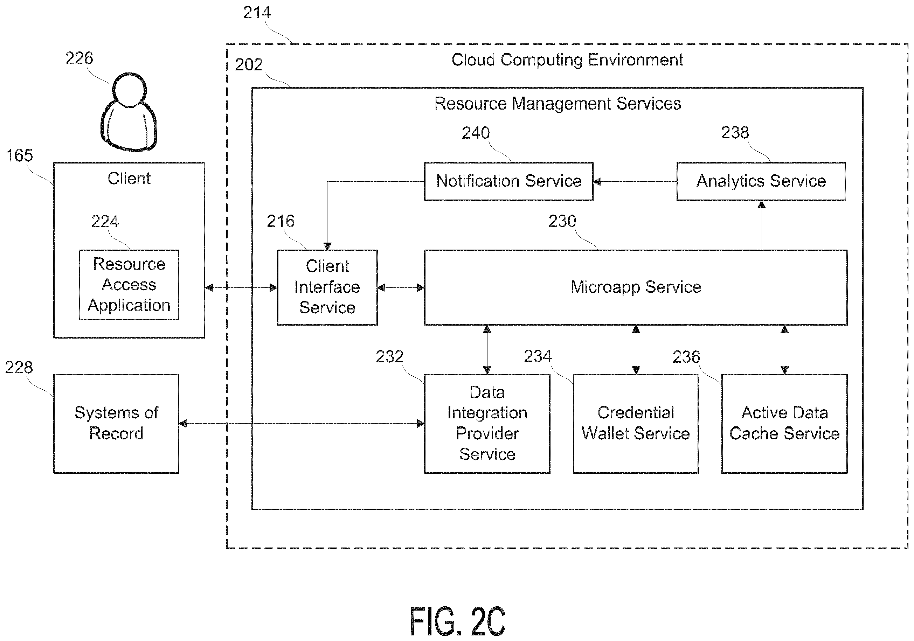

FIG. 2C is a block diagram similar to that shown in FIG. 2B but in which the available resources (e.g., SaaS applications, web applications, Windows applications, Linux applications, desktops, file repositories and/or file sharing systems, and other data) are represented by a single box 228 labeled "systems of record," and further in which several different services are included within the resource management services block 202. As explained below, the services shown in FIG. 2C may enable the provision of a streamlined resource activity feed and/or notification process for a client 165. In the example shown, in addition to the client interface service 216 discussed above, the illustrated services include a microapp service 230, a data integration provider service 232, a credential wallet service 234, an active data cache service 236, an analytics service 238, and a notification service 240. In various embodiments, the services shown in FIG. 2C may be employed either in addition to or instead of the different services shown in FIG. 2B.

In some embodiments, a microapp may be a single use case made available to users to streamline functionality from complex enterprise applications. Microapps may, for example, utilize APIs available within SaaS, web, or homegrown applications allowing users to see content without needing a full launch of the application or the need to switch context. Absent such microapps, users would need to launch an application, navigate to the action they need to perform, and then perform the action. Microapps may streamline routine tasks for frequently performed actions and provide users the ability to perform actions within the resource access application 224 without having to launch the native application. The system shown in FIG. 2C may, for example, aggregate relevant notifications, tasks, and insights, and thereby give the user 226 a dynamic productivity tool. In some embodiments, the resource activity feed may be intelligently populated by utilizing machine learning and artificial intelligence (AI) algorithms. Further, in some implementations, microapps may be configured within the cloud-computing environment 214, thus giving administrators a powerful tool to create more productive workflows, without the need for additional infrastructure. Whether pushed to a user or initiated by a user, microapps may provide short cuts that simplify and streamline key tasks that would otherwise require opening full enterprise applications. In some embodiments, out-of-the-box templates may allow administrators with API account permissions to build microapp solutions targeted for their needs. Administrators may also, in some embodiments, be provided with the tools they need to build custom microapps.

Referring to FIG. 2C, the systems of record 228 may represent the applications and/or other resources the resource management services 202 may interact with to create microapps. These resources may be SaaS applications, legacy applications, or homegrown applications, and can be hosted on-premises or within a cloud computing environment. Connectors with out-of-the-box templates for several applications may be provided and integration with other applications may additionally or alternatively be configured through a microapp page builder. Such a microapp page builder may, for example, connect to legacy, on-premises, and SaaS systems by creating streamlined user workflows via microapp actions. The resource management services 202, and in particular the data integration provider service 232, may, for example, support REST API, JSON, OData-JSON, and 6ML. As explained in more detail below, the data integration provider service 232 may also write back to the systems of record, for example, using OAuth2 or a service account.

In some embodiments, the microapp service 230 may be a single-tenant service responsible for creating the microapps. The microapp service 230 may send raw events, pulled from the systems of record 228, to the analytics service 238 for processing. The microapp service may, for example, periodically pull active data from the systems of record 228.

In some embodiments, the active data cache service 236 may be single-tenant and may store all configuration information and microapp data. It may, for example, utilize a per-tenant database encryption key and per-tenant database credentials.

In some embodiments, the credential wallet service 234 may store encrypted service credentials for the systems of record 228 and user OAuth2 tokens.

In some embodiments, the data integration provider service 232 may interact with the systems of record 228 to decrypt end-user credentials and write back actions to the systems of record 228 under the identity of the end-user. The write-back actions may, for example, utilize a user's actual account to ensure all actions performed are compliant with data policies of the application or other resource being interacted with.

In some embodiments, the analytics service 238 may process the raw events received from the microapps service 230 to create targeted scored notifications and send such notifications to the notification service 240.

Finally, in some embodiments, the notification service 240 may process any notifications it receives from the analytics service 238. In some implementations, the notification service 240 may store the notifications in a database to be later served in a notification feed. In other embodiments, the notification service 240 may additionally or alternatively send the notifications out immediately to the client 165 as a push notification to the user 226.

In some embodiments, a process for synchronizing with the systems of record 228 and generating notifications may operate as follows. The microapp service 230 may retrieve encrypted service account credentials for the systems of record 228 from the credential wallet service 234 and request a sync with the data integration provider service 232. The data integration provider service 232 may then decrypt the service account credentials and use those credentials to retrieve data from the systems of record 228. The data integration provider service 232 may then stream the retrieved data to the microapp service 230. The microapp service 230 may store the received systems of record data in the active data cache service 236 and also send raw events to the analytics service 238. The analytics service 238 may create targeted scored notifications and send such notifications to the notification service 240. The notification service 240 may store the notifications in a database to be later served in a notification feed and/or may send the notifications out immediately to the client 165 as a push notification to the user 226.

In some embodiments, a process for processing a user-initiated action via a microapp may operate as follows. The client 165 may receive data from the microapp service 230 (via the client interface service 216) to render information corresponding to the microapp. The microapp service 230 may receive data from the active data cache service 236 to support that rendering. The user 226 may invoke an action from the microapp, causing the resource access application 224 to send that action to the microapp service 230 (via the client interface service 216). The microapp service 230 may then retrieve from the credential wallet service 234 an encrypted OAuth2 token for the system of record for which the action is to be invoked, and may send the action to the data integration provider service 232 together with the encrypted OAuth2 token. The data integration provider service 232 may then decrypt the OAuth2 token and write the action to the appropriate system of record under the identity of the user 226. The data integration provider service 232 may then read back changed data from the written-to system of record and send that changed data to the microapp service 230. The microapp service 230 may then update the active data cache service 236 with the updated data and cause a message to be sent to the resource access application 224 (via the client interface service 216) notifying the user 226 that the action was successfully completed.

In some embodiments, in addition to or in lieu of the functionality described above, the resource management services 202 may provide users the ability to search for relevant information across all files and applications. A simple keyword search may, for example, be used to find application resources, SaaS applications, desktops, files, etc. This functionality may enhance user productivity and efficiency as application and data sprawl is prevalent across all organizations.

In other embodiments, in addition to or in lieu of the functionality described above, the resource management services 202 may enable virtual assistance functionality that allows users to remain productive and take quick actions. Users may, for example, interact with the "Virtual Assistant" and ask questions such as "What is Bob Smith's phone number?" or "What absences are pending my approval?" The resource management services 202 may, for example, parse these requests and respond because they are integrated with multiple systems on the back-end. In some embodiments, users may be able to interact with the virtual assistance functionality either through the resource access application 224 or directly from another resource, such as Microsoft Teams. This feature may allow employees to work efficiently, stay organized, and deliver only the specific information they are looking for.

### C. Systems and Methods for Autonomous Program Detection

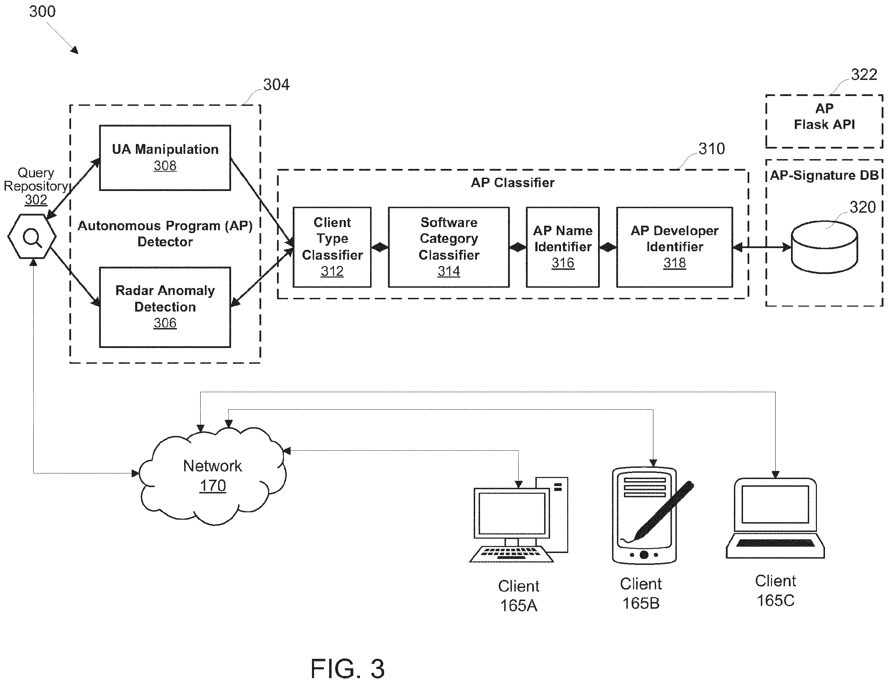

Referring now to FIG. 3, an autonomous program detection and classification system 300 is shown in accordance with an illustrative embodiment. The system 300 is structured to detect and classify autonomous programs (e.g., online bots, intelligent agents, etc.) so that online entities may monitor online website traffic and address any potential security threats posed by malicious autonomous programs.

The autonomous program detection and classification system 300 includes a query repository 302. The query repository 302 may be configured to store queries associated with detecting a given autonomous program or set of autonomous programs. In some embodiments, the queries may be in the form of real user measurements (RUMs). RUMs refer to real time metrics collected from user browsers or native apps towards a huge list of endpoints including various different cloud platforms and content delivery networks (CDNs). These metrics are collected and aggregated to create performance scores (availability, latency and throughput) from various geographic regions (e.g., continent, country, region, state, locality, etc.) and networks towards a list of cloud points of presence (POPs) and CDNs. POPs may be defined as access points or locations at which two or more network devices may connect. In some embodiments, the queries may be in the form of an HTTP request. The HTTP request may be received from one or more client devices 165A-165C. Specifically, the client devices 165A-165C may be configured to automatically submit HTTP requests whenever a website is accessed through the client device. In other embodiments, the HTTP request may be manually submitted by interacting (e.g., selecting a button, accessing certain websites, etc.) with the client devices 165A-165C so that a HTTP request is submitted. In some embodiments, the queries make up the RUMs collected from the client devices 165A-165C. The queries may be stored in a query repository which stores RUMs. After the RUMs have been imported and stored in the query repository 302, an autonomous program is identified using the autonomous program detection and classification system 300. RUM data is fetched in the form of micro-batches. These data batches are driven through the following components of the autonomous program detection and classification system 300 to distinguish the portion of the data related to an autonomous program

The autonomous program detection and classification system 300 may also include an autonomous program detector 304. The autonomous program detector 304 may be or include any device, component, element, or hardware which is configured to detect, flag, determine, or otherwise identify an autonomous program based on RUM data and network traffic. The RUM data may be imported to a RUM database (such as the query repository 302) at short regular intervals. The autonomous program detector 304 is configured to analyze the RUM data and classify the RUM traffic as either "human" network traffic or "autonomous program" network traffic. The autonomous program detector 304 analyzes network traffic by evaluating the RUMs received from the client devices 165A-165C and stored in the query repository 302. In some embodiments, the autonomous program detector 302 nay include a radar anomaly engine 306 and a user agent (UA) manipulation engine 308 to analyze and classify the network traffic as either as either "human" network traffic or "autonomous program" network traffic (e.g., traffic originating from a device operated by a human or traffic originating from a device executing an autonomous program). While shown as to separate engine, it is noted that, in various embodiments, the UA manipulation engine 308 and radar anomaly detection engine 306 can be combined into a single component, engine, or hardware.

The radar anomaly detection engine 306 may be configured to analyze network traffic characteristics to determine anomalies within the network traffic which may be indicative of "autonomous program" network traffic. Specifically, when the network traffic exceeds a certain number of problematic sessions within a pre-defined time window, the radar anomaly detection engine 306 may be configured to mark the network traffic as "suspicious" or "autonomous program traffic". A problematic session refers to a period of online activity where certain characteristics of the network traffic may be indicative of "bot" network traffic. For example, an active session of the client devices 165A-165C which does not produce any kind of network telemetry, as measured by the RUMs, may be considered a problematic session. This is because, in various embodiments, the RUMs may be collected at relatively short intervals. Where no network telemetry data is collected, it may be indicative that the session was opened and closed in an interval which is shorter than the RUM collection interval, which would be anomalous for a human operator (since human operators would typically stay on page corresponding to the session for at least a short duration).

In some embodiments, the radar anomaly detection engine 306 may use other network client-side telemetry data to identify a problematic session. For example, the radar anomaly detection engine 306 may use the total round-trip time (RTT) to determine a problematic session. Specifically, the radar anomaly detection engine 306 may compare the RTT to an expected value (e.g., an RTT average, RTT median, etc.). If the RTT value is vastly different from the expected value, then the radar anomaly detection engine 306 may identify that the network traffic is indicative of a problematic session. As another example, the radar anomaly detection engine 306 may also utilize the total page load time, the start rending time, and the total DOM time to identify problematic sessions. A problematic session may indicate that the network traffic produced during an active session of the client devices 165A-165C is produced by an autonomous program. Once a problematic session has been identified, an autonomous program classifier 310 may further analyze the RUM data from the problematic to classify the autonomous program as will explained in more detail below.

The UA manipulation engine 308 may be or include any device, component, element, or hardware designed or configured to track a user's user agent field through a fingerprint evaluation. A user agent may be defined as an HTTP header field which the UA manipulation engine 308 may use to transfer information regarding the autonomous program. The user agent may be sent by an autonomous program to a web server to transfer information. More specifically, using third party information combined with several network traffic analysis tools, the UA manipulation engine 308 may be configured to determine any traffic related to an autonomous program's user-agents.

Furthermore, and in some embodiments, the autonomous program detector 304 may be configured to apply the above described RUM data analysis to the user-session level. However, due to the client-side information available, the autonomous program detector 304 may be configured to identify, for a user session, additional information relating to the session, such as the reported IP address of the client device, the autonomous system number (ASN) of the client device, the geographic region of the client device, the user-agent, etc. In this way, the autonomous program detector 304 can also act as an IP address reputation mechanism and a user-agent reputation mechanism in addition to identifying and classifying autonomous programs. More specifically, certain client devices may be associated with producing a heavy amount of autonomous program traffic. For example, if the autonomous program detector 304 has identified a certain amount of problematic sessions associated with a particular client device, as identified by either the IP address, ASN, or geographic region of the client device, then the autonomous program detector 304 may assign a heavy autonomous program traffic reputation to the client device as producing a heavy amount of autonomous program traffic. In such cases, the identifying characteristics (e.g., IP address, ASN, geographic region, etc.) of the client devices may be stored in a database with its corresponding reputation (e.g., heavy autonomous program traffic, low autonomous program traffic, etc.) so that the autonomous program detector 304 may more readily analyze and categorize future traffic from the client device to identify autonomous program traffic.

The system 300 may also include an autonomous program classifier 310 which is configured to analyze and classify an autonomous program based on the RUM data from the session identified by the autonomous program detector 304. The autonomous program classifier 310 includes a client type classifier 312, a software category classifier 314, an autonomous program name identifier 316, and an autonomous program developer identifier 318. While shown as separate components, in various embodiments, the client type classifier 312, the software category classifier 314, autonomous program name identifier 316, and/or autonomous program developer identifier may be combined into a single component, or may be further broken down into sub-components.

The client type classifier 312 may be configured to classify (e.g., determine, identify, categorize, or otherwise classify) an autonomous program based on the user agent corresponding to the session. In some embodiments, the client type classifier 312 may be configured to classift the autonomous program traffic as either permitted (good, useful, non-nefarious, allowed, etc.) or excluded (bad, harmful, nefarious, disallowed, malicious, etc.). This is achieved after the client type classifier 312 cross-validates each reported user agent against the information acquired from one or more third party sources. In some embodiments, the one or more third party sources may include a "autonomous program reports" resource, which has thorough lists of classified malicious bots, advertising bots, crawlers and scrapers. In some embodiments, the exemplary open information sources may include the "nginx-ultimate-bad-bot-blocker" GitHub project, which includes comprehensive lists of malicious referrers and good / malicious user-agents. In some embodiments, the exemplary open information sources may include the "stopbadbots" website that contains thorough lists of malicious referrers and malicious user-agents.

The autonomous program classifier 310 may also include a software category classifier 314. The software category classifier 314 may be or include any device, component, element, or hardware designed or configured to define (e.g., determine, identify, categorize, classify, or otherwise define) the software category and consequently the usage purpose of the autonomous program. In some embodiments, the software category classifier 314 defines the software category and the usage purpose by cross-checking each individual user agent against several hardcoded rules dynamically constructed from the information acquired from the aforementioned open-information sources. The software category classifier 314 may sort the autonomous program into the following software categories: an application, a browser, an application engine software, a site monitor (e.g., google_crawler), an analyzer, a scraper, a feed, a speed_test, a media_player, a link checker tool, a screenshot tool, an advertising crawler, etc.

The autonomous program classifier 310 may also include an autonomous program name identifier 316 which may be configured to determine the published name of the autonomous program. Specifically, the autonomous program name identifier 316 parses the user agent to determine one or more identifiers associated with the autonomous program. Then, the autonomous program name identifier 316 cross-validates the one or more identifiers of the reported user agent with one or more third party sources by performing a look-up using the identifiers of the autonomous program against the third party sources. Further, the autonomous program name identifier 316 may use several hardcoded rules constructed from the information acquired from the one or more third party sources to determine the name of the autonomous program.

The autonomous program classifier 310 may also include an autonomous program developer identifier 318 which is configured to determine the developer (e.g., originator, vendor, producer, etc.) of the identified autonomous program. Similarly to the analysis performed by the autonomous program name identifier 316, the autonomous program developer identifier 318 parses the user agent to determine one or more identifiers associated with the autonomous program. Then the autonomous program developer identifier 318 cross-validates the one or more identifiers of the reported user agent with one or more third party sources by performing a look-up using the identifiers of the autonomous program against the third party sources. Further, the autonomous program developer identifier 318 may use several hardcoded rules constructed from the information acquired from the one or more third party sources to determine the developer of the autonomous program.

The system 300 may also include an autonomous program signature database 320. The autonomous program signature database 320 may be or include any data structure, storage, memory, or other data store which is designed or configured to store classifications of autonomous programs identified by the autonomous program detector and classified by the autonomous program. The autonomous program signature database 320 may be configured to receive the outcome of the autonomous program classifier 310. Having identified and properly classified the autonomous program from any related traffic from any corresponding RUM data micro-batch, the autonomous program classifier 310 imports the outcome of the autonomous program classifier 310 in the appropriate form and schema to the autonomous program signature database 320. The autonomous program classifier 310 can be configured to update the autonomous program signature database 320 at short regular intervals via the autonomous program flask application programming interface (API) 322. In other words, the autonomous program classifier 310 and/or the autonomous program detector 304 may access the autonomous program signature database 320 through, for example, an API 322. The API 322 may be a software intermediary which allows two programming applications to communicate with each other. Computer programs and network devices may communicate amongst themselves, or with the underlying operating system, through APIs. In some embodiments, the API may be a Rest Flask API, wherein the Flask is a web framework for creating an API. The autonomous program Flask API 322, leveraging and sharing some information from the autonomous program-signature database 320, can make feasible the real-time autonomous program detection of any incoming traffic, by providing several endpoints.

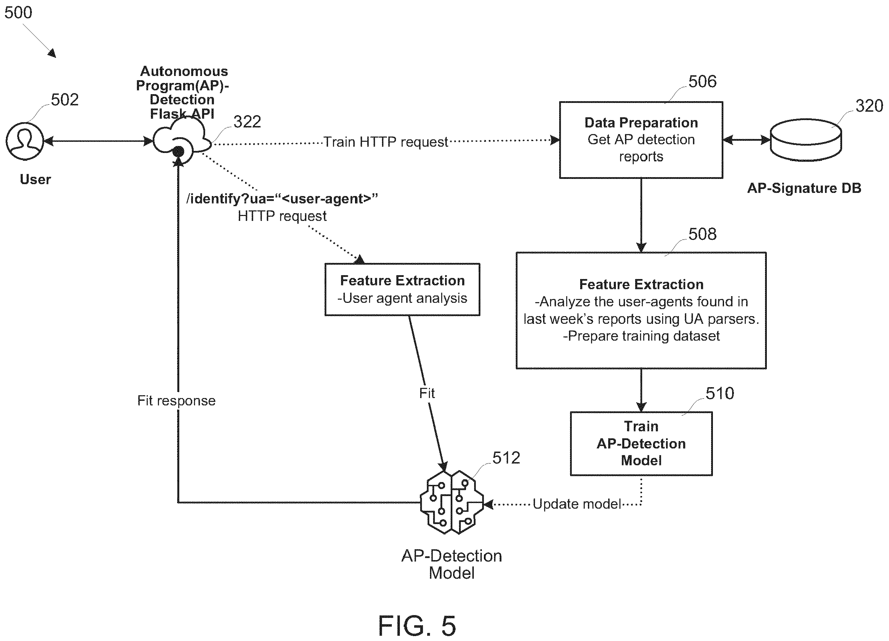

As described in greater detail below, any incoming session can be promptly identified and classified, by the autonomous program detector 304 and the autonomous program classifier 310 as originating from an autonomous program in real-time based on, for example, a session identification field (e.g., the IP-address, the user-agent string, etc.). The autonomous program classifier can derive certain endpoints for every user session by parsing the user agent for center identifiers. These endpoints can be used to direct the autonomous program detection and classification system 300 and/or an autonomous program detection model training system 500 to execute certain actions (e.g., train a model, identify an autonomous program, etc.). The autonomous program detection model training system is described in more detail below with reference to FIG. 5.

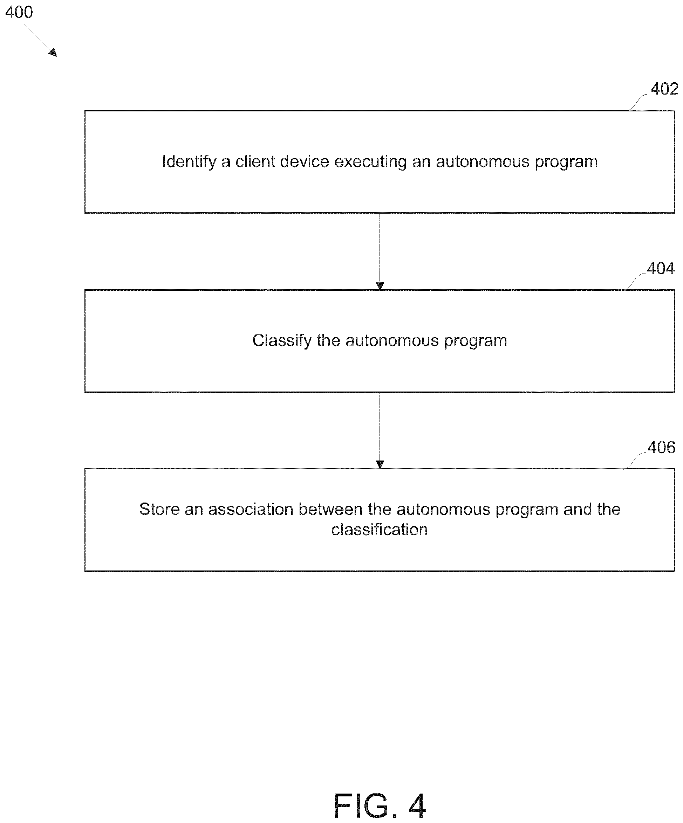

Referring now to FIG. 4, a flow diagram describing a method 400 for detecting an autonomous program is shown, in accordance with an illustrative embodiment. The method describes the process for detecting and classifying an autonomous program. The method 400 may be executed by the components, elements, or hardware of the autonomous program detection and classification system 300, such as the autonomous program detector 304 and the autonomous program classifier 310. As a brief overview of the method 400, at step 402, the autonomous program detector 304 identifies a client device executing an autonomous program. At step 404, the autonomous program classifier 310 classifies the autonomous program. At step 406, the autonomous program classifier 310 stores an association between the autonomous program and the classification in the autonomous program signature database 320.

The method 400 begins at step 402 with the autonomous program detector 304 identifying a client device executing an autonomous program based on traffic from multiple client devices. The client device refers to any computing device which has access to one or more remote resources, such as an internet-based website or application, a hosted computing environment, etc., and can generate network traffic. The client devices may include desktop PCs, laptops, smartphones, smart watches, tablets, etc.). The autonomous program detector 304 execute step 402 in response to receiving a HTTP request as described above. The autonomous program detector 304 identifies that a client device is executing an autonomous program by analyzing network traffic from the user device in the form of RUMs. More specifically, the autonomous program detector is configured to analyze network traffic characteristics to determine problematic network traffic which may indicate that the client device is executing an autonomous program. In some embodiments, this step further includes determining that a number of user sessions have been established by the client device within a time window. If the autonomous program detector 304 determines that the number of sessions has surpassed a certain threshold, then the autonomous program detector 304 determines that an autonomous program has been detected. In some embodiments, identifying the client device includes identifying an RTT, a total page load time, a start rendering time, or a total DOM time which satisfies a predetermined threshold criteria. The method then proceed to step 404.

At step 404, the autonomous program detection and classification system 300 classifies the autonomous program into one or more classifications based on an attribute of the autonomous program. More specifically, the autonomous program classifier 310 classifies the autonomous program determined at step 402 in response to determining that the client device is executing an autonomous program. In some embodiments, the classification is done based open-source information sources and information stored in other databases as described above. In some embodiments, the autonomous program is classified based on at least one of a client type, a software category, a name associated with the autonomous program, and a developer of the autonomous program. As described above, the software category may include an application, a browser, an application engine software, a site monitor (e.g., google_crawler), an analyzer, a scraper, a feed, a speed_test, a media_player, a link_checker tool, a screenshot tool, an advertising crawler, etc. At step 406, the autonomous program detection and classification system 300 stores an association between the autonomous program and the classification in the autonomous program signature database 320.

### D. Systems and Methods for Training an Autonomous Program Detection Model

Referring now to FIG. 5, a diagram of an autonomous program detection model training system 500 is shown in accordance with an illustrative embodiment. The autonomous program detection model training system 500 includes the autonomous program detection API 322, the autonomous program signature database 320, and the autonomous program detection model 512. As mentioned above, the system 500 may be configured to identify and classify any incoming session as originating from a client device executing an autonomous program in real-time based on a session identification field (e.g., the IP-address, the user-agent string, etc.). During the training phase or endpoint, the autonomous program detection model 512 may be trained (e.g., by the autonomous program detector 304, autonomous program classifier 310, or some other engine or component of the systems 300, 500 - generally referred to as "the autonomous program detection model training system 500"), using the data from the autonomous program signature database 320 (e.g., from a previous time duration, such as the previous week). In some embodiments, the autonomous program detection model 512 may be a client-type ADA-boost model. During deployment, the autonomous program detection model 512 may be configured to use real-time session and/or traffic data corresponding to a client device to classify an autonomous program in real-time.

The autonomous program detection model training system 500 may be configured to train the autonomous program detection model 512 by fetching an autonomous program-signature information collected over a previous time period (e.g., previous day, previous week, previous month, etc.) at 506. The autonomous program-signature information may be collected from the autonomous program-signature database 320. In some embodiments, the autonomous program-signature information may be collected and organized in the form of autonomous program detection reports. Based on the autonomous program detection reports, the autonomous program detection model training system 500 extracts a list of unique user agent signatures and their respective client-type labels based on the autonomous program-signature information at 508. More specifically, the autonomous program detection model training system 500 parses the user agent strings using various commands or software libraries (including, but not limited to, Python's *user-agents* library) to extract the following features: *browser.family, browser.version_string, os.family, os.version_string, device.family, device. model, device.brand.* The autonomous program detection model training system 500 then tokenizes these features to create the training vocabulary. It should be noted that any punctuation mark and conjunction word may be excluded from user agent strings that are parsed.

The autonomous program detection model training system 500 is further configured to analyze and express each unique user agent signature as a vector of features. The autonomous program detection model training system 500 transforms the previous mapping of the unique *user agents* with their respective *client type* labels, using NLP techniques and user agent parsers, to create a client-type classification ready training dataset. Having analyzed and expressed each unique user agent signature as a vector of features, the autonomous program detection model training system 500 transforms the previous mapping of the unique user agents with their client_type label into a training data set for the autonomous program detection model. The autonomous program detection model training system 500 may use NLP techniques and the above presented user agent parsers to transform the parsed user agent strings to a client-type classification ready training dataset. The autonomous program training system 500 then trains the autonomous program detection model 512 at 510 with the client-type classification ready training data set. In various embodiments, the autonomous program detection model 512 may be or include any machine learning model including, for example, ADA-Boost, SVM, Random-Forest, neural networks, or any other type of model.

It should be understood that due to the vastly volatile and rapidly changing user-agent signatures as additional autonomous programs are deployed, the client type prediction mechanism may act as a safety net to ensure the accurate autonomous program's intention classification without requiring any prior knowledge. In the case where a session might be uniquely identified by its user agent, the real-time autonomous program detection evaluation of the network traffic from the user session may be done by the system 500. For any given user agent string or session from a client, the trained autonomous program detection model 512 is deployed by the system 500 to detect and classify the autonomous program which may be executing on the client device.

Apart from the client-type prediction made, the information parsed from the user agent may also be enriched with the corresponding autonomous program-signature database information by the system 500. This combination of information eventually forms the JSON response returned to the user. The JSON response includes the "user_agent_type", which is the field indicating the type of given signature that can be either "human" or "autonomous program". If the type of signature is an "autonomous program", the JSON response may also include the "client_type" and the "client_type_prediction" which indicates the autonomous program's intentions and its predicted intentions accordingly. Those might be either good or bad. If the type of signature is an "autonomous program", the JSON response may also include the "software_category" that indicates the autonomous program's purposes. This might get one of the following values: *application, browser, google app engine_software, google_crawler, site monitor, analyzer, scraper, feed, speed test, media_player*, *link_checker, tool, screenshot, advertising, crawler.* If the type of signature is a "autonomous program", the JSON response may also include the "name", which presents the detected autonomous program's name. If the type of signature is a "autonomous program", the JSON response may also include the "developer", which indicates the originator/vendor/producer of the identified autonomous program. If the type of signature is a "autonomous program", the comma separated list of the domains that this autonomous program has been found, in the "domains" field. Such enrichment may be performed as part of generating the prediction itself (e.g., by the model 512 ingesting such data and including the data in the predicted response, or separately by the system 500 retrieving the data from the database 320 and including the data with the response from the model 512).

Some modifications in the autonomous program signature database 320 and the autonomous program detection API 322 may be made if another session identifier be selected, such as the client IP address, the client ASN, the client region, etc. For example, in the case that the client address is used, the endpoint "/identify?ip="<IP-address>" may be used instead of "/identify?ua="<user-agent>". The autonomous program detection model training system 500 provides many advantages including a robust and accurate way of identifying and analyzing autonomous program related traffic in real-time. This may be achieved through the real-time user-behavior analysis and network fingerprints evaluation of a large amount of RUM transactions that the systems collects in real-time. Additionally, the autonomous program detection model training system 500 can keep the autonomous program detection model up to date so that the autonomous program detection model training system 500 and the autonomous program detection and classification system 300 can identify in real-time the malicious autonomous program traffic before the malicious autonomous programs become an actual threat.

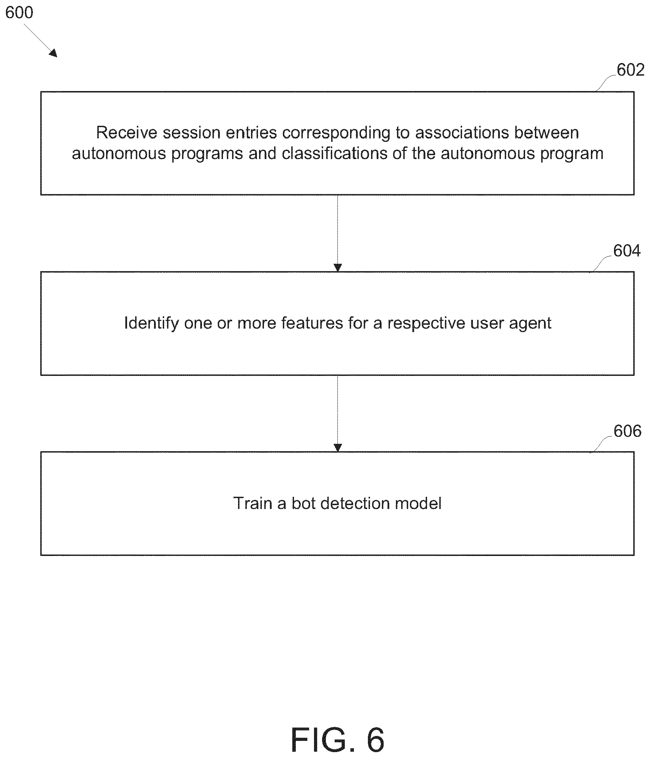

Referring now to FIG. 6, a flow diagram describing a method 600 for training an autonomous detection model in accordance with an illustrative embodiment is shown, in accordance with an illustrative embodiment. The method describes the process for training a model which is configured to detect an autonomous program. The method 600 may be executed by the autonomous program detection model training system 500 and specifically by the autonomous program detection flask API 322, the autonomous program signature database 320, and the autonomous program detection model 512. As a brief overview of the method 600, at step 602, the autonomous program detection flask API receives one or more entries corresponding to associations between autonomous programs and classifications of the autonomous program. At step 604, the autonomous program detection flask API 322 identifies one or more features for a user agent corresponding to an autonomous program. At step 606, the system 300 trains the autonomous program detection model.

The method begins at step 602 where the autonomous program detection model training system 500 receives entries corresponding to associations between autonomous programs and one or more classifications of the autonomous program. In some embodiments, the entries may be the user agent strings as described above. The user agent strings may determined based on RUMs from network traffic of a client device. The system 500 may parse the user agent strings to determine one or more endpoints. The system 500 may retrieve, identify, or otherwise receive the entries over a time window. The time window may be, for example, a day, a week, two weeks, a month, etc. In other words, the system 500 may receive the entries daily, weekly, bi-weekly, monthly, etc. The system 500 may receive the entries from one or more data structures or databases, such as the autonomous program signature database 320 described above.

At step 604, the autonomous program detection model training system 500 identifies, for each entry of the multiple entries, one or more features for a respective user agent corresponding to the autonomous program and a corresponding classification of the autonomous program. As described above, the features may be extracted from the user agent strings. The system 500 may extract the feature(s) from the entries received at step 602. The system 500 may extract the feature(s) at each time instance in which entries from the data structure are received. The user agent strings may be parsed using python's user-agents library to extract the one or more features including, for example, browser.family, browser.version_string, os.family, os.version_string, device.family, device.model, and/or device.brand. These features are then tokenized to create the training vocabulary. The training system 500 may compile a training set to include the tokenized features and a classification for the corresponding autonomous program.

In some embodiments, at step 604, the system 500 may also analyze and express each unique *user agent* signature as a vector of the extracted features. The autonomous program detection model training system 500 may then transform the previous mapping of the unique *user agents* with their respective *client type* labels, using NLP techniques and user agent parsers, to create a client-type classification ready training dataset.

At step 606, the autonomous program detection model training system 500 trains the autonomous program detection model 606 using the one or more features for each entry and the corresponding classification. More specifically, the autonomous program detection model training system 500 trains the autonomous program detection model 606 based on the client-type classification ready training dataset created at step 604. The system 500 may train the model 606 using the training set which includes feature(s) and corresponding classifications. The classifications may be or include labels for a particular feature set. The system 500 may train the model 600 to identify a classification (e.g., classify) an autonomous program by applying a user agent field to the model 600 (including one or more features for the user agent field). The model 600 may generate a classification for the user agent field corresponding to an autonomous program based on the user agent field. Thus, the model 600 may be configured to classify similar autonomous programs based on the user agent field of the autonomous program in relation to the classified autonomous program.

In some embodiments, the system 500 may re-train the model 606. The system 500 may retrain the model 606 at various instances. For example, the system 500 may retrain the model 606 at various instances using new or updated data from the data source / database accessed at step 602. In some embodiments, the system 500 may re-train the model 600 using updated data for a subsequent time window. For example, where the system 500 trains the model 600 weekly, the system 500 may receive the entries from the database at a first time instance for a prior time window (e.g., for the previous week). The system 500 may re-train the model 600 responsive to receiving the entries for the first time instance. At the second time instance (e.g., the subsequent week), the system 600 may receive the entries from the database for the previous week from the second time instance. The system 600 may re-train the model using the entries received at the second time instance. In this regard, the system 500 may re-train, modify, or otherwise update the model 600 on a rolling basis, such that the model 600 adapts to new autonomous programs that may be deployed.

### E. Example Embodiments

The following examples pertain to further example embodiments, from which permutations and configurations will be apparent.

Example 1 includes a method. The method includes identifying, by one or more processors based at least on traffic from a plurality of client devices, at least one client device of the plurality of client devices executing an autonomous program. The method includes classifying, by the one or more processors, the autonomous program into one or more classifications based on at least one attribute of the autonomous program. The method includes storing, by the one or more processors, an association between the autonomous program and the one or more classifications.

Example 2 includes the subject matter of Example 1, where identifying the at least one client device executing the autonomous program comprises identifying, by the one or more processors, the at least one client device based on at least one of: a number of sessions established by the at least one client device within a time window, or user-session data associated with execution of the autonomous program.

Example 3 includes the subject matter of Example 2, wherein the at least one client device is identified as executing the autonomous program responsive to the number of sessions established by the at least one client device within the time window satisfies a threshold criteria.

Example 4 includes the subject matter of Example 2, wherein the user session data comprises user agent data, and wherein the at least one client device is identified as executing the autonomous program based on the user agent data.

Example 5 includes the subject matter of Examples 1, wherein identifying the at least one client device executing the autonomous program comprises identifying, by the one or more processors, the at least one client device based on at least one of a total round trip time (RTT), a total page load time, a start rendering time, or a total document object model (DOM) time satisfying a threshold criteria.

Example 6 includes the subject matter of Examples 1, wherein classifying the autonomous program into the one or more classifications further comprises: identifying, by the one or more processors, in one or more databases maintaining data corresponding to user agents for respective autonomous programs, an entry of a user agent associated with the autonomous program and determining, by the one or more processors, the at least one of the autonomous program type, the software category, the autonomous program name, or the developer of the autonomous program based on the entry for the user agent in the one or more databases.

Example 7 includes the subject matter of Example 1, wherein the software category is at least one of an application software category, a browser software category, a browser application engine software category, a site monitor software category, an analyzer software category, a feed software category, a speed test software category, a media player software category, a link checker software category, a tool software category, a screenshot software category, an advertising software category, a crawler software category, or a scraper software category.

Example 8 includes the subject matter of Example 1, wherein the association is stored in one or more data structures, the method further comprising: retrieving, by the one or more processors, from the one or more data structures, a plurality of entries corresponding to autonomous programs; extracting, by the one or more processors, for each entry of the plurality of entries, one or more features for a respective user agent corresponding to the autonomous program; and training, by the one or more processors, a machine learning model using the one or more features for each entry and the corresponding classification.

Example 9 includes the subject matter of Example 1, wherein the traffic comprises first traffic, the method further comprising: receiving, by the one or more processors, second traffic from a second client device of the plurality of client devices; identifying, by the one or more processors, based on the second traffic, that the second client device is executing a second autonomous program; identifying, by the one or more processors, a user agent field corresponding to the second traffic; and classifying, by the one or more processors, the second autonomous program by applying data corresponding to the user agent field to the machine learning model.

Example 10 includes the subject matter of Example 1, wherein the at least one attribute comprises a type of the autonomous program, a category of software of the autonomous program, a name of the autonomous program, or a developer of the autonomous program.

Example 11 includes a method. The method includes receiving, by one or more processors, a plurality of entries over a time window, the plurality of entries corresponding to associations between respective autonomous programs executing on client devices and one or more classifications of the autonomous program. The method identifying, by the one or more processors, for each entry of the plurality of entries, one or more features for a respective user agent corresponding to the autonomous program and a corresponding classification of the autonomous program. The method includes training, by the one or more processors, a machine learning model using the one or more features for each entry and the corresponding classification.

Example 12 includes the subject matter of Example 11, the method further includes receiving, by the one or more processors, traffic from a client device. The method further includes identifying, by the one or more processors, based on the traffic, that the client device is executing an autonomous program. The method further includes identifying, by the one or more processors, a user agent field corresponding to the traffic. The method further includes classifying, by the one or more processors, the autonomous program executing on the client device by applying data corresponding to the user agent field to the machine learning model.

Example 13 includes the subject matter of Example 11, wherein the time window is a first time window. The method further includes retrieving, by the one or more processors, from one or more data structures, a plurality of second entries over a second time window. The method further includes re-training, by the one or more processors, the machine learning model using one or more second features and corresponding classifications for each of the plurality of second entries.

Example 14 includes the subject matter of Example 11, the method further includes identifying, by one or more processors, based on traffic from a plurality of client devices, at least one client device executing an autonomous program. The method further includes classifying, by the one or more processors, the autonomous program into one or more classifications based on at least one of an autonomous program type, a software category, an autonomous program name, or a developer of the autonomous program. The method further includes storing, by the one or more processors in the one or more data structures, an association between the autonomous program and the one or more classifications.

Example 15 includes the subject matter of Example 12, wherein identifying the at least one client device executing the autonomous program comprises identifying, by one or more processors, the at least one client device based on at least one of a number of sessions established by the at least one client device within a time window, or user-session data associated with execution of the autonomous program.

Example 16 includes the subject matter of Example 13, wherein the at least one client device is identified as executing the autonomous program responsive to the number of sessions established by the at least one client device within the time window satisfies a threshold criteria.

Example 17 includes the subject matter of Example 13, wherein the user session data comprises user agent data, and wherein the at least one client device is identified as executing the autonomous program based on the user agent data.

Example 18 includes the subject matter of Example 12, wherein identifying the at least one client device executing the autonomous program comprises identifying, by the one or more processors, the at least one client device based on at least one of a total round trip time (RTT), a total page load time, a start rendering time, or a total document object model (DOM) time satisfying a threshold criteria.

Example 19 includes the subject matter of Example 12, wherein classifying the autonomous program into the one or more classifications further comprises identifying, by the one or more processors, in one or more databases maintaining data corresponding to user agents for respective autonomous programs, an entry of a user agent associated with the autonomous program and determining, by the one or more processors, the at least one of the autonomous program type, the software category, the autonomous program name, or the developer of the autonomous program based on the entry for the user agent in the one or more databases.

Example 20 includes a system. The system includes one or more processors. The one or more processors are configured receive a plurality of entries over a time window, the plurality of entries corresponding to associations between respective autonomous programs executing on client devices and one or more classifications of the autonomous program.. The one or more processors are configured to identify, for each entry of the plurality of entries, one or more features for a respective user agent corresponding to the autonomous program and a corresponding classification of the autonomous program. The one or more processors are configured to train a machine learning model using the one or more features for each entry and the corresponding classification.

Various elements, which are described herein in the context of one or more embodiments, may be provided separately or in any suitable subcombination. For example, the processes described herein may be implemented in hardware, software, or a combination thereof. Further, the processes described herein are not limited to the specific embodiments described. For example, the processes described herein are not limited to the specific processing order described herein and, rather, process blocks may be re-ordered, combined, removed, or performed in parallel or in serial, as necessary, to achieve the results set forth herein.

It should be understood that the systems described above may provide multiple ones of any or each of those components and these components may be provided on either a standalone machine or, in some embodiments, on multiple machines in a distributed system. The systems and methods described above may be implemented as a method, apparatus or article of manufacture using programming and/or engineering techniques to produce software, firmware, hardware, or any combination thereof. In addition, the systems and methods described above may be provided as one or more computer-readable programs embodied on or in one or more articles of manufacture. The term "article of manufacture" as used herein is intended to encompass code or logic accessible from and embedded in one or more computer-readable devices, firmware, programmable logic, memory devices (e.g., EEPROMs, ROMs, PROMs, RAMs, SRAMs, etc.), hardware (e.g., integrated circuit chip, Field Programmable Gate Array (FPGA), Application Specific Integrated Circuit (ASIC), etc.), electronic devices, a computer-readable non-volatile storage unit (e.g., CD-ROM, USB Flash memory, hard disk drive, etc.). The article of manufacture may be accessible from a file server providing access to the computer-readable programs via a network transmission line, wireless transmission media, signals propagating through space, radio waves, infrared signals, etc. The article of manufacture may be a flash memory card or a magnetic tape. The article of manufacture includes hardware logic as well as software or programmable code embedded in a computer-readable medium that is executed by a processor. In general, the computer-readable programs may be implemented in any programming language, such as LISP, PERL, C, C++, C#, PROLOG, or in any byte code language such as JAVA. The software programs may be stored on or in one or more articles of manufacture as object code.

While various embodiments of the methods and systems have been described, these embodiments are illustrative and in no way limit the scope of the described methods or systems. Those having skill in the relevant art can effect changes to form and details of the described methods and systems without departing from the broadest scope of the described methods and systems. Thus, the scope of the methods and systems described herein should not be limited by any of the illustrative embodiments and should be defined in accordance with the accompanying claims and their equivalents.

## Claims

1. A method, comprising:
identifying, by one or more processors based at least on traffic from a plurality of client devices, at least one client device of the plurality of client devices executing an autonomous program;
classifying, by the one or more processors, the autonomous program into one or more classifications based on at least one attribute of the autonomous program; and
storing, by the one or more processors, an association between the autonomous program and the one or more classifications.

2. The method of claim 1, wherein identifying the at least one client device executing the autonomous program comprises:
identifying, by the one or more processors, the at least one client device based on at least one of:
a number of sessions established by the at least one client device within a time window, or
user-session data associated with execution of the autonomous program.

3. The method of claim 2, wherein the at least one client device is identified as executing the autonomous program responsive to the number of sessions established by the at least one client device within the time window satisfies a threshold criteria.

4. The method of claim 2, wherein the user session data comprises user agent data, and wherein the at least one client device is identified as executing the autonomous program based on the user agent data.

5. The method of claim 1, wherein identifying the at least one client device executing the autonomous program comprises:
identifying, by the one or more processors, the at least one client device based on at least one of a total round trip time (RTT), a total page load time, a start rendering time, or a total document object model (DOM) time satisfying a threshold criteria.

6. The method of claim 1, wherein classifying the autonomous program into the one or more classifications further comprises:
identifying, by the one or more processors, in one or more databases maintaining data corresponding to user agents for respective autonomous programs, an entry of a user agent associated with the autonomous program; and
determining, by the one or more processors, the at least one of the autonomous program type, the software category, the autonomous program name, or the developer of the autonomous program based on the entry for the user agent in the one or more databases.

7. The method of claim 1, wherein the association is stored in one or more data structures, the method further comprising:
retrieving, by the one or more processors, from the one or more data structures, a plurality of entries corresponding to autonomous programs;
extracting, by the one or more processors, for each entry of the plurality of entries, one or more features for a respective user agent corresponding to the autonomous program; and
training, by the one or more processors, a machine learning model using the one or more features for each entry and the corresponding classification.

8. The method of claim 7, wherein the traffic comprises first traffic, the method further comprising:
receiving, by the one or more processors, second traffic from a second client device of the plurality of client devices;
identifying, by the one or more processors, based on the second traffic, that the second client device is executing a second autonomous program;
identifying, by the one or more processors, a user agent field corresponding to the second traffic;
classifying, by the one or more processors, the second autonomous program by applying data corresponding to the user agent field to the machine learning model.

9. A method, comprising:
receiving, by one or more processors, a plurality of entries over a time window, the plurality of entries corresponding to associations between respective autonomous programs executing on client devices and one or more classifications of the autonomous program;
identifying, by the one or more processors, for each entry of the plurality of entries, one or more features for a respective user agent corresponding to the autonomous program and a corresponding classification of the autonomous program; and
training, by the one or more processors, a machine learning model using the one or more features for each entry and the corresponding classification.

10. The method of claim 9, further comprising:
receiving, by the one or more processors, traffic from a client device;
identifying, by the one or more processors, based on the traffic, that the client device is executing an autonomous program;
identifying, by the one or more processors, a user agent field corresponding to the traffic;
classifying, by the one or more processors, the autonomous program executing on the client device by applying data corresponding to the user agent field to the machine learning model.

11. The method of claim 9, wherein the time window is a first time window, the method further comprising:
retrieving, by the one or more processors, from one or more data structures, a plurality of second entries over a second time window; and
re-training, by the one or more processors, the machine learning model using one or more second features and corresponding classifications for each of the plurality of second entries.

12. The method of claim 9, further comprising:
identifying, by one or more processors, based on traffic from a plurality of client devices, at least one client device executing an autonomous program;
classifying, by the one or more processors, the autonomous program into one or more classifications based on at least one of an autonomous program type, a software category, an autonomous program name, or a developer of the autonomous program; and
storing, by the one or more processors in the one or more data structures, an association between the autonomous program and the one or more classifications.

13. The method of claim 10, wherein identifying the at least one client device executing the autonomous program comprises:
identifying, by the one or more processors, the at least one client device based on at least one of:
a number of sessions established by the at least one client device within a time window, or
user-session data associated with execution of the autonomous program.

14. The method of claim 10, wherein identifying the at least one client device executing the autonomous program comprises:
identifying, by the one or more processors, the at least one client device based on at least one of a total round trip time (RTT), a total page load time, a start rendering time, or a total document object model (DOM) time satisfying a threshold criteria.

15. The method of claim 10, wherein classifying the autonomous program into the one or more classifications further comprises:
identifying, by the one or more processors, in one or more databases maintaining data corresponding to user agents for respective autonomous programs, an entry of a user agent associated with the autonomous program; and
determining, by the one or more processors, the at least one of the autonomous program type, the software category, the autonomous program name, or the developer of the autonomous program based on the entry for the user agent in the one or more databases.
